# EUROPÄISCHE PATENTSCHRIFT

(11) **EP 0 397 915 B1**
(45) Veröffentlichungstag und Bekanntmachung des Hinweises auf die Patenterteilung: **15.06.1994**
(21) Anmeldenummer: 89115987.3
(22) Anmeldetag: 30.08.1989
(51) Int. Cl.: F15B 15/08, F16K 31/163

(54) **Pneumatisches Stellglied**
Pneumatic actuator
Actionneur pneumatique

(30) Priorität: 15.04.1989 DE 8904747 U
(43) Veröffentlichungstag der Anmeldung: 22.11.1990
(73) Patentinhaber: Wexler, Zeev, Haifa (IL)
(72) Erfinder: Wexler, Zeev, Haifa (IL)
(74) Vertreter: Hagemann, Heinrich, Dr.rer.nat., Dipl.-Chem.

(56) Entgegenhaltungen:
- EP-A- 0 037 746
- EP-A- 0 050 466
- EP-A- 0 279 236
- DE-A- 2 817 260
- GB-A- 2 073 815
- US-A- 2 998 805

## Beschreibung

Die Erfindung betrifft einen pneumatischen oder hydraulischen Drehantrieb gemäß dem Oberbegriff des Patentanspruches 1.

Bei einem bekannten solchen Drehantrieb zur pneumatischen Betätigung von Kugelhähnen, Luftklappen und Verriegelungen von Anlagentüren (DE-A-33 08 109) besteht das Schraubgetriebe aus einem in einer hohen Kolbenstange angeordneten Steilgewinde, in das ein entsprechendes Außengewinde auf dem drehbaren, aber axial unverschielbichen wellenförmigen Abtriebsglied eingreift. Die Herstellung eines solchen Schraubengetriebes ist aufwendig, und es besteht die Gefahr der Verschmutzung und Blockierung mit fortschreitender Einsatzdauer.

Aus der EP-A-0 050 466 ist ein pneumatischer oder hydraulischer Drehantrieb für einen Absperrhahn bekannt, dessen Kraftzylinder eine zenterale Kolbenstange mit einem diametralen Querbolzen aufweist, welcher Paare von Langlöchern in zwei gegen Axialverschiebung gehaltenen konzentrischen Steuerhülsen durchragt, von denen die äußere gegen Drehung gehalten ist und die innere das Abtriebsglied bildet, wobei die Langlöcher in der einen Steuerhülse gerade ausgebildet sind, während die Langlöcher in der anderen Steuerhülse schraubenförmig um deren Achse verlaufen.

Bei einem solchen Drehantrieb muß der Kraftzylinder eine Absperrwand an der Seite aufweisen, an der die Kolbenstange aus dem Zylinder herausragt. Die Kolbenstange muß durch diese Absperrwand dicht geführt sein, sodaß die Absperrwand zusammen mit dem Kolben einen Arbeitsraum des Kraftzylinders bilden kann. Eine gleichartige Vorrichtung ist aus der DE-A-2 817 260 bekannt. Die bekannten Vorrichtungen weisen den Nachteil einer großen Bauweise auf, insbesondere weil die oben genannte Absperrwand vorgesehen werden muß.

Der Erfindung liegt die Aufgabe zugrunde, diese Nachteile durch Ausbildung eines Drehantriebes der eingangs genannten Art dahingehend zu vermeiden, daß die Herstellung wesentlich vereinfacht und damit verbilligt wird und zugleich weitgehende Unempfindlichkeit gegenüber Verschmutzungen besteht. Der Drehantrieb der Erfindung soll sich insbesondere durch kleine Bauweise auszeichnen.

Erfindungsgemäß wird diese Aufgabe durch die im kennzeichnenden Teil des Patentanspruches 1 angegebenen Merkmale gelöst.

Nach einem ersten Merkmal zur vorteilhaften Ausgestaltung der Erfindung ist die äußere Steuerhülse drehschlüssig mit dem Gehäuse des Absperrhahns gekuppelt, wodurch das auf die Steuerhülse ausgeübte Reaktionsmoment unmittelbar auf das Gehäuse des Absperrhahns übertragen wird.

Ein anderes Ausgestaltungsmerkmal der Erfindung sieht vor, daß die schraubenförmig verlaufenden Langlöcher in der äußeren Steuerhülse angeordnet sind. Hierdurch wird erreicht, daß diese Langlöcher auf einem größeren Radius zu liegen kommen, was die Fertigung erleichtert. Außerdem hat dieses Merkmal zur Folge, daß der Kolben mit dem Hub auch eine Drehbewegung ausführt.

Noch ein anderes Ausgestaltungsmerkmal der Erfindung sieht vor, daß die äußere Steuerhülse am kraftzylinderseitigen Ende einen nach einwärts gerichteten Flansch aufweist, der einen axialen Anschlag für die innere Steuerhülse bildet.

Nach einem weiteren Ausgestaltungsmerkmal der Erfindung der Drehantrieb mit einer Spannvorrichtung zum Festspannen an einem Absperrhahn versehen. Dies erleichtert die Befestigung des Drehantriebes und gibt zugleich die Möglichkeit, den Drehantrieb zu Wartungszwecken auf einfache Weise zu lösen und erneut zu befestigen.

Wie bereits eingangs erwähnt, kann der Kraftzylinder doppeltwirkend oder auch einfachwirkend mit Rückstellung durch Federkraft ausgebildet sein.

Die Erfindung wird nachstehend in Verbindung mit der Zeichnung näher erläutert. Es zeigen:
- Fig. 1: eine Seitenansicht eines Kugel-Absperrhahns mit einem daran angebrachten Drehantrieb gemäß der Erfindung, der einen doppeltwirkenden Kraftzylinder enthält,
- Fig. 2: einen Längsschnitt durch den Drehantrieb nach Linie II - II in Fig. 1,
- Fig. 3 und 4: die beiden Steuerhülsen des Drehantriebs in perspektivischer Darstellung und
- Fig. 5: einen Teil der Fig. 2 mit zwei verschiedenen Ausführungen von Anzeigevorrichtungen für die Kolben- bzw. Ventilstellung.

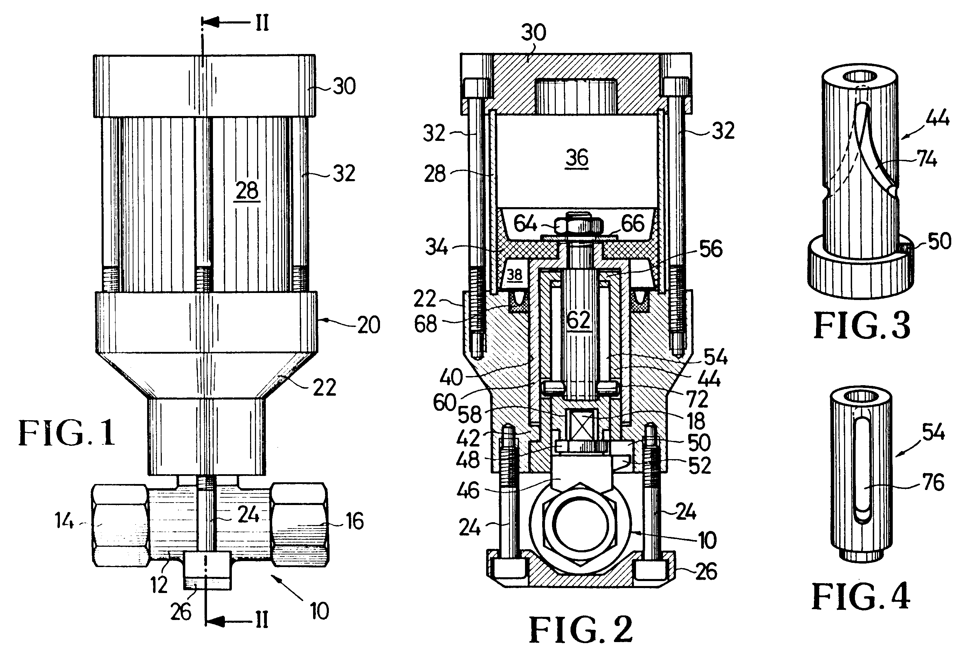

In Fig. 1 und 2 ist mit 10 ein herkömmliches Kugel-Absperrventil bezeichnet, das in der Hauptsache aus einem metallischen Gehäuse 12 mit Rohranschlüssen 14, 16 an den Enden sowie einen nicht gezeigten kugeligen Absperrküken im Inneren besteht, welches durch Drehen einer an einem Vierkant 18 endenden Welle um 90° zwischen einer Durchlaßstellung und einer Absperrstellung umstellbar ist.

Zum Drehen des Absperrkükens dient ein in seiner Gesamtheit mit 20 bezeichneter Drehantrieb, der im Beispielsfall als pneumatischer Antrieb ausgebildet ist. Er kann jedoch im Rahmen der Erfindung auch ein hydraulischer Antrieb sein, was im wesentlichen eine Frage der Größe seiner Teile und ihrer Abdichtung ist.

Der Drehantrieb 20 weist ein Gußgehäuse 22 auf, das mit Schrauben 24 und einem Joch 26 am Gehäuse 12 des Kugel-Absperrventils 10 festgeklemmt ist. Das Gehäuse 22 bildet die eine Stirnwand eines doppeltwirkenden pneumatischen Kraftzylinders, dessen als Hülse 28 ausgebildete Mantelwand mit ihren Endkanten in Ringnuten des Gehäuses 22 bzw. eines die andere Stirnwand bildenden Deckels 30 dichtend eingreift und zwischen dem Gehäuse 22 und dem Deckel 30 durch Schrauben 32 verspannt ist. In der Hülse 28 ist ein Kolben 34 zwischen den Stirnwänden des Kraftzylinders verschieblich und dichtend aufgenommen und trennt eine obere Arbeitskammer 36 von einer unteren Arbeitskammer 38, die über (nicht gezeigte) steuerbare Druckluftanschlüsse wechselweise mit Druckluft gefüllt oder entlüftet werden können, um den Kolben 34 zu senken bzw. zu heben.

Das Gehäuse 22 enthält ferner eine zur Hülse 28 koaxiale Durchgangsbohrung 40, in der mit Abstand zum unteren Ende ein Ringbund 42 ausgebildet ist. Der Ringbund 42 bildet einen Anschlag für eine von unten in das Gehäuse 22 eingesetzte und darin auf geeignete Weise drehfest und unverschieblich gehaltene Steuerhülse 44, in die ein Ansatz 46 des Absperrhahngehäuses 12 mit einer Stopfbuchsenmutter 48 zur Abdichtung der Betätigungswelle des Absperrhahns 10 ragt. Ein radialer Schlitz 50 am unteren, verdickten Ende der Steuerhülse 44 nimmt einen nasenförmigen Vorsprung 52 am Absperrhahngehäuse 22 auf und schafft eine zusätzliche Verdrehungssicherung für die Steuerhülse 44 gegenüber dem Gehäuse 12 des Absperrhahns 10.

Die Steuerhülse 44 nimmt mit engem Spiel eine zweite Steuerhülse 54 auf und hält diese mit einem einwärts gerichteten Ringkragen 56 am oberen Ende gegenüber Aufwärtsbewegungen in Stellung. Das untere Ende der inneren Steuerhülse 54 ist massiv ausgebildet und enthält ein Vierkantloch 58 zur drehschlüssigen Aufnahme des Vierkants 18 am Kugel-Absperrhahn 10. Die Stopfbuchsenmutter 48 hält die Steuerhülse 54 nach unten in Stellung, wobei ein gewisses Spiel der inneren Steuerhülse 54 in axialer Richtung unschädlich ist.

Der Kolben 34 enthält eine zentrale Bohrung, in die eine hohle, erste Kolbenstange 60 und eine zentrale, zweite Kolbenstange 62 eingesetzt und mit einer Gewindemutter 64 sowie einer Unterleg- und Dichtungsscheibe 66 befestigt sind. Die hohle, erste Kolbenstange 60 ragt verschieblich und drehbar in den oberen Teil der Durchgangsbohrung 40 außerhalb der äußeren Steuerhülse 44 und ist in der Durchgangsbohrung 40 durch eine Dichtmanschette 68 abgedichtet. Die zentrale zweite Kolbenstange 62 erstreckt sich frei verschieblich in das Innere der inneren Steuerhülse 54 und trägt am unteren Ende einen Querbolzen 72, dessen herausragende Enden sich durch jeweils zwei Langlöcher 74 bzw. 76 in den Steuerhülsen 44, 54 erstrecken. Die Langlöcher 76 in der inneren Steuerhülse 54 sind, wie Fig. 4 zeigt, gerade ausgebildet und verlaufen achsparallel, während die Langlöcher 74 in der äußeren Steuerhülse 44, wie Fig. 3 zeigt, schraubenförmig um die Hülsenachse verlaufen.

Die Wirkungsweise des vorgeschriebenen Drehantriebs ist folgende:
Es sei angenommen, daß in der in Fig. 2 gezeigten Stellung, in der sich der Kolben 34 in seiner unteren Endstellung befindet, der Kugel-Absperrhahn geschlossen ist. Soll nun der Kugel-Absperrhahn geöffnet werden, wird die obere Arbeitskammer 36 des Drehantriebs 20 entlüftet und die untere Arbeitskammer 38 an eine Druckluftquelle angeschlossen mit der Folge, daß auf die Unterseite des Kolbens 34 eine nach aufwärts wirkende Antriebskraft ausgeübt wird. Diese Kraft wird über die innere Kolbenstange 62 auf den Querbolzen 72 übertragen und bewirkt, daß bei der Aufwärtsbewegung des Kolbens 34 die innere Kolbenstange 62 mit dem Kolben 34 und der äußeren Kolbenstange zugleich eine Drehbewegung ausführt. Diese Drehbewegung wird über den Querbolzen 72 auch auf die innere Steuerhülse 54 übertragen und bewirkt die Drehung des Absperrkükens über den Vierkant 18.

Soll das Kugel-Absperrventil 10 wieder geschlossen werden, werden die untere Arbeitskammer 38 entlüftet und die obere Arbeitskammer 36 an Druckluft angeschlossen, woraufhin sich der Kolben nach abwärts bewegt und in umgekehrter Weise, wie zuvor beschrieben, den Absperrhahn schließt.

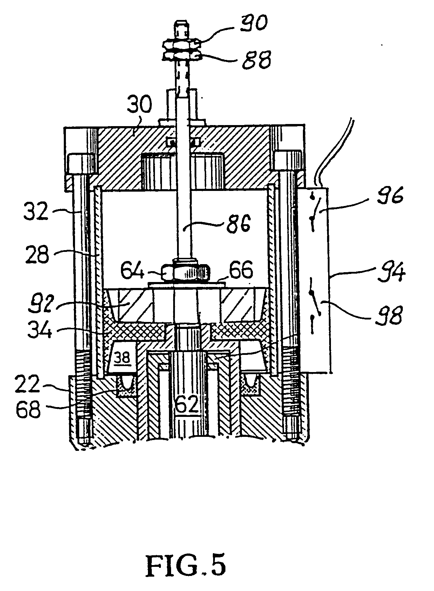

Fig. 5 zeigt schließlich einen Teil der Fig. 2 mit zwei verschiedenen Vorrichtungen für die Anzeige der Stellung des Kolbens 34 und damit des Kugel-Absperrhahns oder eines anderen Ventils. Die eine Vorrichtung besteht aus einer Stange 86, die eine Verlängerung des Gewindeansatzes der Kolbenstange 62 bildet und den Deckel 30 abgedichtet durchragt. Das aus dem Kraftzylinder herausragende obere Ende der Stange 86 ist mit Gewinde versehen und trägt zwei gekonterte Muttern 88, 90, aus deren Stellung die Kolben- bzw. Ventilstellung ersichtlich ist.

Anstelle dieser Anzeigevorrichtung oder auch in Kombination mit dieser kann noch eine weitere Anzeigevorrichtung verwendet werden, die aus einem am Kolben 34 mittels der Mutter 64 und der Unterlegscheibe 66 verspannten ringförmigen Permanentmagneten 92 und einem mit diesem durch die unmagnetische Hülse 28 zusammenwirkenden Doppel-Sensor 94 besteht. Der Doppelsensor 95 enthält zwei kraftflußempfindliche Schaltkontakte 96, 98, die - je nach Stellung des Kolbens 34 - wechselweise betätigt werden. Der Vorteil dieser Anzeigevorrichtung liegt zum einen in der Möglichkeit der Fernübertragung und zum anderen in der möglichen Überwachung von Fehlfunktionen des Drehantriebs dahingehend, daß Zwischenstellungen, in denen keiner der Schaltkontakte geschlossen ist, sofort erkennbar sind.

## Patentansprüche

1. Pneumatischer oder hydraulischer Drehantrieb, insbesondere für einen Absperrhahn wie einen Kugel-Absperrhahn (10), bestehend aus einem zur Drehachse des Absperrkükens koaxialen Kraftzylinder, dessen Kolbenhub über ein Schraubgetriebe in die Drehbewegung eines mit dem Absperrküken drehschlüssig verbundenen Abtriebsgliedes (54) überführbar ist, wobei der Kraftzylinder eine zentrale Kolbenstange (62) mit einem diametralen Querbolzen (72) aufweist, welcher Paare von Langlöchern (74, 76) in zwei gegen Axialverschiebung gehaltenen konzentrischen Steuerhülsen (44, 54) durchragt, von denen die äußere (44) gegen Drehung gehalten ist und die innere (54) das Abtriebsglied bildet, wobei die Langlöcher (76) in der einen Steuerhülse (54) gerade ausgebildet sind, während die Langlöcher (74) in der anderen Steuerhülse (44) schraubenförmig um deren Achse verlaufen, **dadurch gekennzeichnet,** daß der Kraftzylinder außer der zentralen Kolbenstange (62) eine die Steuerhülsen (44, 54) umschließende hohle Kolbenstange (60) aufweist, welche die eine Endwand (22) des Kraftzylinders verschieblich und dichtend durchragt.

2. Drehantrieb nach Anspruch 1, dadurch gekennzeichnet, daß die äußere Steuerhülse (44) drehschlüssig mit dem Gehäuse (12) des Absperrhahns (10) gekuppelt ist.

3. Drehantrieb nach Anspruch 1 oder 2, dadurch gekennzeichnet, daß die schraubenförmig verlaufenden Langlöcher (74) in der äußeren Steuerhülse (44) angeordnet sind.

4. Drehantrieb nach einem der Ansprüche 1 bis 3, dadurch gekennzeichnet, daß die äußere Steuerhülse (44) am kraftzylinderseitigen Ende einen nach einwärts gerichteten Flansch (56) aufweist, der einen axialen Anschlag für die innere Steuerhülse (54) bildet.

5. Drehantrieb nach einem der vorhergehenden Ansprüche, dadurch gekennzeichnet, daß der Drehantrieb (20) mit einer Spannvorrichtung (24, 26) zum Festspannen an einem Absperrhahn (10) versehen ist.

6. Drehantrieb nach einem der vorhergehenden Ansprüche, dadurch gekennzeichnet, daß der Kraftzylinder ein doppeltwirkender Kraftzylinder ist.

## Claims

1. Pneumatic or hydraulic rotary actuator, particularly for a stopcock, such as a ball stopcock (10), comprising a power cylinder which is coaxial with the rotary axis of the shut-off plug and whose piston stroke may be converted via a worm gear into the rotary movement of an output member (54) which is rotationally fixedly connected to the shut-off plug, whereby the power cylinder has a central piston rod (62) with a diametral transverse peg (72), which projects through pairs of elongate holes (74, 76) in two concentric control sleeves (44, 54), which are secured against axial displacement and of which the outer one (44) is secured against rotation and the inner one (54) constitutes the output member, whereby the elongate holes (76) in the one control sleeve (54) are straight whilst the elongate holes (74) in the other control sleeve (44) extend helically about its axis, characterised in that outside the central piston rod (62) the power cylinder has a hollow piston rod (60) which surrounds the control sleeves (44, 54) and which extend slidably and in a sealed manner through the one end wall (22) of the power cylinder.

2. Rotary actuator as claimed in Claim 1, characterised in that the outer control sleeve (44) is rotationally fixedly coupled to the housing (12) of the stopcock (10).

3. Rotary actuator as claimed in Claim 1 or 2, characterised in that the helical elongate holes (74) are disposed in the outer control sleeve (44).

4. Rotary actuator as claimed in one of Claims 1 to 3, characterised in that at the power cylinder end the outer control sleeve (44) has an inwardly directed flange (56) which forms an axial abutment for the inner control sleeve (54).

5. Rotary actuator as claimed in one of the preceding claims, characterised in that the rotary actuator (20) is provided with a clamping device (24, 26) for clamping to a stopcock (10).

6. Rotary actuator as claimed in one of the preceding claims, characterised in that the power cylinder is a double-acting power cylinder.

## Revendications

1. Dispositif d'entraînement en rotation pneumatique ou hydraulique, en particulier pour un robinet d'arrêt tel qu'un robinet d'arrêt à boisseau sphérique (10), consistant en un vérin de transmission de force coaxial par rapport à l'axe de rotation du boisseau d'arrêt, dont la course de piston est transformable, par l'intermédiaire d'une transmission hélicoïdale, dans le mouvement de rotation d'un organe entraîné (54) relié, coincé géométriquement en rotation, avec le boisseau d'arrêt, où le vérin de transmission d'effort présente une tige de piston centrale (62) avec un goujon transversal (72) diamétral, lequel fait saillie à travers des paires de trous longitudinaux (74, 76) dans deux manchons de commande (44, 54) concentriques, maintenus contre une translation axiale, desquels, l'extérieur (44) est maintenu contre une rotation et l'intérieur (54) forme l'organe entraîné, où, les trous longitudinaux (76) dans l'un des manchons de commande (54) sont constitués rectilignes, tandis que les trous longitudinaux (74) dans l'autre manchon de commande (44) s'étendent en forme d'hélice autour de son axe, caractérisé en ce que le vérin de transmission d'effort présente, à l'extérieur de la tige de piston centrale (62), une tige de piston creuse (60) entourant les manchons de commande (44, 54), laquelle fait saillie à travers une paroi d'extrémité (22) du vérin de transmission d'effort, translatable et assurant une étanchéité.

2. Dispositif d'entraînement en rotation selon la revendication 1, caractérisé en ce que le manchon de commande extérieur (44) est couplé, coincé géométriquement en rotation, avec le corps (12) du robinet d'arrêt (10).

3. Dispositif d'entraînement en rotation selon la revendication 1 ou la revendication 2, caractérisé en ce que les trous longitudinaux (74) s'étendant en forme d'hélice sont agencés dans le manchon de commande extérieur (44).

4. Dispositif d'entraînement en rotation selon une des revendications 1 à 3, caractérisé en ce que le manchon de commande extérieur (44), à l'extrémité du côté du vérin de transmission d'effort, présente une collerette (56) orientée vers l'intérieur, qui forme une butée axiale pour le manchon de commande intérieur (54).

5. Dispositif d'entraînement en rotation selon une des précédentes revendications, caractérisé en ce que le dispositif d'entraînement en rotation (20) est pourvu d'un dispositif de mise sous contrainte (24, 26) pour le serrage à un robinet d'arrêt (10).

6. Dispositif d'entraînement en rotation selon une des précédentes revendications, caractérisé en ce que le vérin de transmission d'effort est un vérin de transmission d'effort à double effet.
